# EUROPÄISCHE PATENTSCHRIFT

(11) **EP 2 152 553 B1**
(45) Veröffentlichungstag und Bekanntmachung des Hinweises auf die Patenterteilung: **22.09.2010**
(21) Anmeldenummer: 08715531.3
(22) Anmeldetag: 05.03.2008
(51) Int. Cl.: B60T 7/10, F16H 59/02

(54) **BEDIENVORRICHTUNG FÜR EIN FAHRZEUG MIT AUTOMATISIERTEM GETRIEBE UND EINEM ELEKTRISCH BETÄTIGTEN PARKBREMSSYSTEM**
OPERATING DEVICE FOR A VEHICLE HAVING AN AUTOMATIC TRANSMISSION AND AN ELECTRICALLY ACTUATED PARKING BRAKE SYSTEM
DISPOSITIF DE COMMANDE POUR UN VÉHICULE ÉQUIPÉ D'UNE BOÎTE DE VITESSES AUTOMATIQUE ET D'UN SYSTÈME DE FREIN DE STATIONNEMENT ACTIONNÉ ÉLECTRIQUEMENT

(30) Priorität: 07.05.2007 DE 102007021831
(43) Veröffentlichungstag der Anmeldung: 17.02.2010
(73) Patentinhaber: ZF Friedrichshafen AG, 88038 Friedrichshafen (DE)
(72) Erfinder: GIEFER, Andreas, 49448 Lemförde (DE); MEYER, Jörg, 49419 Wagenfeld (DE); RAKE, Ludger, 49356 Diepholz (DE)
(86) Internationale Anmeldenummer: PCT/DE2008/000382
(87) Internationale Veröffentlichungsnummer: WO 2008/135003

(56) Entgegenhaltungen:
- EP-A- 0 972 667
- DE-A1- 19 610 766
- DE-A1- 19 955 016

## Beschreibung

### Technisches Umfeld

Die Erfindung betrifft eine Bedienvorrichtung für ein Fahrzeug mit automatisiertem Getriebe und einem elektrisch betätigten Parkbremssystem, bestehend aus mindestens einem mechanischen Betätigungselement zur Eingabe von Bedienbefehlen des Fahrzeugnutzers und einer Steuerungseinheit zur Umsetzung der Bedienfehle in Steuersignale an das Getriebe und das Parkbremssystem.

### Stand der Technik

So eine Bedienvorrichtung ist aus der EP0972667A bekannt, Die eingangs genannte gattungsgemäße Bedienvorrichtung wird in unterschiedlicher Ausgestaltung bei Fahrzeugen mit automatisiertem Getriebe und einem elektrisch betätigten Parkbremssystem eingesetzt. Die Bedienvorrichtung besteht dabei in der Regel aus zwei getrennten Betätigungsschaltern oder dergleichen und dient dabei dazu, entsprechend den Vorgaben des Nutzers ein Fahrzeug sicher abzustellen.

Prinzipiell bestehen bei Fahrzeugen mit der oben genannten Ausstattung zwei unterschiedliche Möglichkeiten, nach dem Abstellen des Fahrzeuges dieses gegen ungewolltes Wegrollen zu sichern.

Zum einen sind bei Fahrzeugen mit automatisierten Getriebe, wobei unter der genannten Art von Getrieben sowohl halbautomatische Getriebe mit manueller Gangwahl und automatischer Kupplungsbetätigung als auch vollautomatische Getriebe verstanden werden, die verwendeten Getriebe mit einer so genannten Parksperrvorrichtung versehen. Die Parksperrvorrichtung greift dabei in aller Regel mechanisch mittels einer dafür geeigneten Verriegelungsvorrichtung, die beispielsweise als Sperrklinke ausgebildet sein kann, mechanisch in das Getriebe ein und verhindert auf diese Weise ein Wegrollen des Fahrzeuges.

Bei Fahrzeugen, deren Getriebe über eine Shift-by-wire-Schaltung betätigt wird, kann die Parksperre elektrisch, hydraulisch oder pneumatisch betätigt werden. Zu diesem Zweck besitzt der Fahrzeugnutzer die Möglichkeit, beispielsweise mittels einer Taste oder eines Hebels die Parksperre nach dem Abstellen des Fahrzeuges selbständig zu aktivieren. Darüber hinaus besteht die Möglichkeit, dass die Parksperre im Getriebe automatisch eingelegt wird, sobald der Fahrzeugnutzer die Zündung ausschaltet, den Zündschlüssel abzieht oder das Fahrzeug verlässt.

Neben der mechanischen Sperrung des automatisierten/oder Automatik-Getriebes besitzt jedes Fahrzeug eine heute im Stand der Technik oftmals elektrisch betätigtes Parkbremssystem, welches in Ergänzung des üblichen Betriebsbremssystems zum einen während des Stillstands des Fahrzeuges ein ungewolltes Wegrollen verhindern kann und gleichzeitig während des Betriebes des Fahrzeuges beispielsweise bei Ausfall des Betriebsbremssystems als ein Notfallbremssystem wirken kann. Ein derartiges elektrisch betätigtes Parkbremssystem wird ähnlich der oben erwähnten Parksperre oftmals ebenfalls über einen Taster oder einen Schalter bedient.

Aufgrund der Gegebenheiten sind sich die Fahrzeugnutzer oftmals bei Vorhandensein beider Systeme über die Inanspruchnahme und Betätigung sowohl der Parksperre als auch des Parkbremssystems im Unklaren. Dies liegt zum einen an der häufig durch ähnliche Symbolgestaltung gekennzeichneten Bedienelemente, wobei es für den Fahrzeugnutzer gleichzeitig schwer nachvollziehbar ist, welche Einzelfunktion die erwähnten Systeme erfüllen.

Gesetzliche Erfordernisse, die sowohl eine Parksperre als auch ein Parkbremssystem zwingend vorschreiben, sind dabei dem Fahrzeugnutzer oftmals unbekannt.

### Aufgabe

Aufgabe der vorliegenden Erfindung ist es daher, ausgehend von den oben geschilderten Nachteilen hinsichtlich der Bedienbarkeit und Funktion der in einem Fahrzeug integrierten unterschiedlichen Sicherheitssysteme gegen ein Wegrollen des Fahrzeuges eine Bedienvorrichtung der eingangs geschilderten gattungsgemäßen Art bereitzustellen, durch die intuitiv dem Fahrzeugnutzer die Möglichkeit gegeben wird, die unterschiedlichen Sicherheitssysteme entsprechend seinen individuellen Vorgaben zu nutzen.

### Lösung

Diese Aufgabe wird erfindungsgemäß dadurch gelöst, dass das Betätigungselement der Bedienvorrichtung mindestens zwei aufeinander folgende Raststellungen sowie eine Neutralposition sowie eine Rückstellposition aufweist, wobei in der ersten Raststellung ein Bedienbefehl an das Parkbremssystem zur Betätigung der Parkbremsvorrichtung und in der zweiten Raststellung ein Bedienbefehl an das Getriebe zur Betätigung der Parksperrvorrichtung generiert wird.

Die spezielle Ausgestaltung der Betätigungselementes vereint somit zwei bislang unterschiedliche und in aller Regel auch innerhalb des Fahrzeuges räumlich getrennte Betätigungselemente in einer gemeinsamen Bedienvorrichtung, so dass dem Fahrzeugnutzer nunmehr problemlos und intuitiv die Wahl bleibt, ob er neben der üblichen Betätigung des elektrisch betätigten Parkbremssystems zusätzlich die dem automatisierten/oder Automatikgetriebe zugeordnete Parksperrvorrichtung einlegen möchte.

Besondere Ausgestaltungen des Gegenstandes der Erfindung ergeben sich zusätzlich aus den auf den Hauptanspruch rückbezogenen Unteransprüchen.

Es hat sich insbesondere als vorteilhaft erwiesen, dass die Steuerungseinheit ein Prüfmodul aufweist, welches die Bedienbefehle des Betätigungselementes nur bei stehendem Fahrzeug an das Getriebe und das Parkbremssystem übermittelt und bei bewegtem Fahrzeug den Bedienbefehl für die Parkbremsvorrichtung als Notbremsbefehl an das Bremssystem des Fahrzeuges zu dessen Betätigung weiterleitet. Durch diese erfindungsgemäße Weiterbildung ist zum einen sichergestellt, dass das Parkbremssystem nur in den Fällen, in denen es benötigt wird, aktiviert werden kann, und dass gleichzeitig die vom Gesetzgeber vorgesehene Notbremsfunktion gewährleistet werden kann. Gleichzeitig ist durch das Prüfmodul sichergestellt, dass die Parksperre bei rollendem Fahrzeug oberhalb einer Grenzgeschwindigkeit (von beispielsweise 3 Km/h) nicht eingelegt werden kann.

Darüber hinaus kann eine weitere zweckmäßige Ausgestaltung des Gegenstandes der Erfindung vorsehen, dass das Betätigungselement als Bedienhebel ausgestaltet ist, bei dem die Raststellungen, die Neutralposition und die Rückstellposition in einer gemeinsamen Lage- und Bewegungsebene angeordnet sind. Die gemeinsame Lageebene erleichtert dabei für den Fahrzeugnutzer die intuitive Betätigung der Bedienvorrichtung und verbessert die ergonomischen Rahmenbedingungen der Fahrzeugnutzung. Zusätzlich vorteilhaft ist es, wenn die Lageebene im Wesentlichen vertikal angeordnet ist, da dann das Betätigungselement vom Fahrzeugnutzer durch Druck- oder Zugbewegung bewegt werden kann. Alternativ ist selbstverständlich auch eine horizontale Anordnung der Lageebene denkbar.

Darüber hinaus kann es vorteilhaft sein, dass das Betätigungselement eine Rückstellvorrichtung zur automatischen Rückpositionierung des Betätigungselementes aus allen Raststellungen und der Rückstellposition in die Neutralposition aufweist. Die Neutralposition bildet dabei eine Mittelposition, aus der alle weiteren Positionen einfach betätigbar sind, wobei vorteilhafterweise die Raststellungen als Betätigungsstellungen durch Ziehen des Betätigungselementes nach oben und die Rückstellposition in entgegengesetzter Richtung aus der Neutralposition heraus durch Drücken des Betätigungselementes nach unten angesteuert wird.

Für bestimmte Anwendungsfälle kann es jedoch auch vorteilhaft sein, dass das Betätigungselement mindestens eine Positioniervorrichtung zur Lagefixierung des Betätigungselementes in einer oder mehrerer der Raststellungen aufweist. Die Lagefixierung in einer oder mehrerer Raststellungen bzw. eventuell zusätzlich in der Rückstellposition kann dem Fahrzeugnutzer durch Inaugenscheinnahme verdeutlichen, ob die elektronische Parkbremse, die Parksperre des Getriebes oder gegebenenfalls durch die Positionierung des Betätigungselementes in der Rückstellposition keine der vorgenannten Elemente des Fahrzeuges eingelegt ist.

Wird das Betätigungselement nicht mit einer Positioniereinrichtung zur Lagefixierung des Betätigungselementes in einer der Raststellungen oder gegebenenfalls in der Rückstellposition versehen, so kann alternativ bei Verwendung einer Rückführung des Betätigungselementes immer in die Neutralposition die Bedienvorrichtung mit einer Anzeigevorrichtung zur Visualisierung der Raststellungen versehen sein.

Auf diese Weise wird dem Fahrzeugnutzer ebenfalls das Einlegen der Parksperre oder die Betätigung des elektrischen Parkbremssystems angezeigt.

Ergänzend sieht eine zweckmäßige Weiterbildung des Gegenstandes der Erfindung vor, dass das Betätigungselement eine Antriebsvorrichtung aufweist, die in Abhängigkeit von Steuerimpulsen der Steuerungseinheit das Betätigungselement in eine der Raststellungen überführt. Vorgesehen ist dies vorrangig für die Fälle, in denen zum einen das Betätigungselement das Einlegen der Parksperre am Getriebe anzeigen soll und gleichzeitig das Fahrzeug mit einer so genannten Auto-P-Funktion versehen ist. Diese Auto-P-Funktion gewährleistet, dass nach Abstellen des Fahrzeuges und gegebenenfalls dem Abziehen des Zündschlüssels oder dem Verlassen des Fahrzeuges durch den Fahrzeugnutzer automatisch die Parksperrfunktion des Getriebes aktiviert wird. Die genannte Antriebsvorrichtung führt in einem solchen Fall das Betätigungselement nach Einlegen der Parksperre durch gesonderte Steuerimpulse in die dem Einlegen der Parksperre am Betätigungselement zugeordnete Position.

Darüber hinaus kann das der Steuerungseinheit zugeordnete Prüfmodul selbstverständlich für weitere logische Abhängigkeiten zwischen verschiedenen Fahrzeugzuständen dienen, um die intuitive und fehlerfreie Bedienbarkeit der erfindungsgemäßen Bedienvorrichtung sicherzustellen.

### Beschreibung der Zeichnung

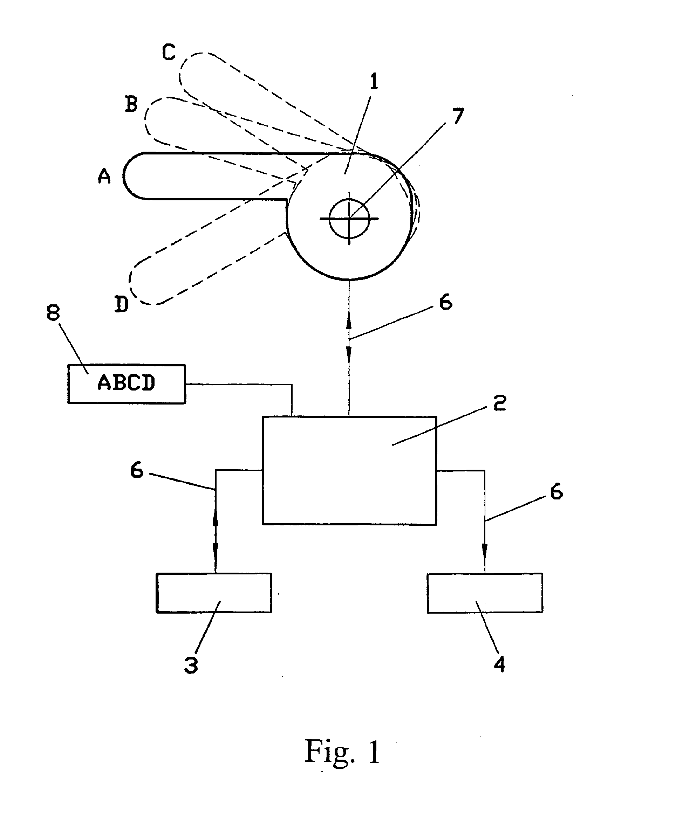

Im Folgenden wird der Gegenstand der Erfindung anhand der beigefügten Zeichnung Figur 1 näher erläutert, wobei die Zeichnung rein schematisch für die Erfindung relevante Bauelemente des Fahrzeuges sowie der erfindungsgemäßen Vorrichtung sowie deren Abhängigkeiten unter Zuhilfenahme eines Bockschaltbildes verdeutlicht.

### Ausführungsbeispiel

Die erfindungsgemäße Bedienvorrichtung weist dabei ein als Bedienhebel gestaltetes Betätigungselement 1 auf, welches als Handhebel um einen Drehpunkt 7 in einer vertikalen Verstellebene drehbar ist. In der Verstellebene befinden sich unterschiedliche Schaltstellungen, die bestimmten Bedienbefehlen zugeordnet sind, wobei die Bedienbefehle, die durch Betätigung des Bedienhebels durch den Fahrzeugnutzer hervorgerufen werden, einer Steuerungseinheit 2 mittels einer Datenleitung 6 zugeführt werden. In der Steuerungseinheit 2 werden diese Bedienbefehle dann in Steuersignale umgesetzt und an das im Fahrzeug vorhandene Getriebe 3 und das Parkbremssystem 4 ebenfalls wiederum mittels entsprechender Datenleitungen 6 weitergeleitet.

Das Betätigungselement 1 weist in seiner Verstellebene verschiedene Schaltstellungen auf, die durch die Buchstaben A, B, C und D verdeutlich sind. Die Stellung A stellt dabei die so genannte Neutralposition dar, in der sich das Betätigungselement 1 immer dann befindet, wenn seitens des Fahrzeugnutzers keine Eingabebefehle im Hinblick auf die Nutzung des Parkbremssystems oder der Parksperre gegeben werden.

An die Neutralstellung A schließen sich nach oben die Raststellungen B und C an. Das Betätigungselement kann dabei den Raststellungen B und C stabil zugeordnet sein, so dass dieses nach Überführen in die Raststellungen B und C in diesen verbleibt. Alternativ hierzu ist es möglich, dass das Betätigungselement mit einer Rückstellvorrichtung versehen ist, die beispielsweise mittels einer Federvorrichtung realisiert werden kann, so dass das Betätigungselement 1 aus den beiden Raststellungen B und C nach Loslassen des Bedienhebels automatisch in die Neutralposition A zurückkehrt. In diesem Fall wäre für das Betätigungselement 1 eine so genannte monostabile konstruktive Gestaltung gewählt.

In beiden Ausgestaltungsvarianten bedeutet ein Überführen des Betätigungselementes 1 in die Raststellung B, das durch diese Maßnahme ein entsprechender Bedienbefehl des Fahrzeugnutzers an die Steuerungseinheit 2 übermittelt wird, der dazu führt, dass ein Steuersignal an das im Fahrzeug befindliche Parkbremssystem 4 generiert und übertragen wird. Dieser Steuerbefehl führt zur Aktivierung des elektrisch betätigten Parkbremssystems 4, wobei gleichzeitig in der Steuerungseinheit 2 geprüft werden kann, ob der Fahrzeugzustand zur Betätigung des Parkbremssystems 4 geeignet ist.

Sollte vom Fahrzeugnutzer das Betätigungselement 1 in seiner Position verändert werden, solange sich das Fahrzeug bewegt, so wird zwar genau wie in oben geschildertem Fall bei stehendem Fahrzeug ein Bedienbefehl an die Steuerungseinheit 2 übermittelt, gleichzeitig erfolgt jedoch die Abgabe eines Steuersignals der Steuerungseinheit 2 dahingehend, dass das im Fahrzeug vorhandene Notbremssystem aktiviert wird. Notbremssystem und Parkbremssystem 4 können vorteilhafterweise im Fahrzeug konstruktiv vereint sein. Entsprechend gestalterische Einzelheiten sind je nach Fahrzeug bei der konstruktiven Gestaltung von Betriebsbremssystem, Parkbremssystem 4 und Notbremssystem festzulegen.

Wird das Betätigungselement 1 über die Raststellung B hinaus in die Raststellung C überführt, so wird ein Bedienbefehl an die Steuerungseinheit 2 mittels der Datenleitung 6 übermittelt, so dass durch die Steuerungseinheit 2 gegebenenfalls nach Überprüfung weiterer Fahrzeugrahmenbedingungen die Parksperre des Getriebes 3 aktiviert wird. Rahmenbedingungen können hierbei beispielsweise der rollende Zustand des Fahrzeuges sein, da das Einlegen der Parksperre am Getriebe 3 beim Rollen des Fahrzeuges oberhalb einer Grenzgeschwindigkeit ausgeschlossen sein muss. Insofern kann das innerhalb der Steuerungseinheit vorhandene Prüfmodul, welches bereits eine unterschiedliche Ansteuerung des Notbremssystems sowie des Parkbremssystems vorsieht, auch dazu genutzt werden, im Falle des Überführens des Betätigungselementes 1 in die Raststellung C Fehlbedienungen und daraus resultierende Beschädigungen an Bauteilen des Fahrzeuges auszuschließen. Die Raststellung C ist somit bei rollendem Fahrzeug oberhalb einer Grenzgeschwindigkeit nur hinsichtlich der Notbremsfunktion wie auch die Raststellung B aktiv und ansonsten ohne Funktion. Festzuhalten ist, dass in der Raststellung C sowohl das Parkbremssystem als auch die Parksperre im Getriebe aktiviert sind, da die Position der Raststellung C über das Durchlaufen der Raststellung B (und daraus resultierender Aktivierung des Parkbremssystems) erreicht wird.

Ist entsprechend einer Ausgestaltungsvariante die Bedienvorrichtung mit einer Rückstellvorrichtung zur automatischen Positionierung des Betätigungselementes 1 aus den Rastestellungen B und C in die Neutralposition A versehen, so kann vorteilhafterweise mittels einer Anzeigevorrichtung 8 das Einlegen des Parkbremssystems 4 und/oder der Parksperre dem Fahrzeugnutzer visuell verdeutlicht werden. Zu diesem Zweck kann an geeigneter Stelle des Armaturenbrettes eine entsprechend Anzeige angeordnet werden.

Soll seitens des Fahrzeugnutzers das Einlegen der Parksperre bzw. die Betätigung des Parkbremssystems 4 aufgehoben werden, so besitzt das Betätigungselement 1 zu diesem Zweck eine weitere so genannte Rückstellposition D, die ausgehend von der Neutralposition A des Betätigungselementes 1 unterhalb von Letzterem positioniert ist, wie dies aus der schematischen Darstellung der Zeichnung hervorgeht.

Die Deaktivierung der Parksperre sowie gegebenenfalls des Parkbremssystems kann auch durch Einlegen eines Fahrbereiches beim Getriebe erfolgen.

Auch aus der Rückstellposition D wird bei Vorhandensein einer Rückstellvorrichtung am Betätigungselement dieses automatisch wieder in die Neutralposition A zurückgeführt. Ist dem Betätigungselement 1 keine Rückstellvorrichtung zugeordnet, so verbleibt dieses nach Bewegung in die Position B, C oder D jeweils in der entsprechenden Raststellung bzw. der Neutralposition, wodurch dem Fahrzeugnutzer unmittelbar die Betätigung des Parkbremssystems bzw. der Parksperre sowie eine Nichtbetätigung beider Systeme angezeigt wird. In einem solchen Fall kann bei Vorhandensein einer so genannten Auto-P-Einrichtung beim Fahrzeug das Betätigungselement 1 mit einer zusätzlichen Antriebsvorrichtung versehen sein, die dazu dient, das Betätigungselement 1 aus seiner Position A oder B oder D automatisch in die Raststellung C zu überführen. Dies muss immer dann geschehen, sofern der Fahrzeugnutzer nach Abstellen des Fahrzeuges den Zündschlüssel abzieht oder das Fahrzeug verlässt, wobei die Auto-P-Funktion in diesem Falle das automatische Einlegen der Parksperre am Getriebe vorsieht.

Selbstverständlich ist das erfindungsgemäße Bediensystem für ein Fahrzeug mit automatisiertem Getriebe und einem elektrisch betätigten Parkbremssystem nicht auf die oben beschriebenen Ausgestaltungsvarianten beschränkt. Vielmehr soll die erfindungsgemäße Gestaltung dem Fahrzeugnutzer eine erleichterte Bedienung der unterschiedlichen Fahrzeugkomponenten Parksperre und Parkbremssystem zur Verfügung stellen, durch die gegebenenfalls Fehlbedienungen ausgeschlossen werden. Zu diesem Zweck können sowohl die Steuerungseinheit 2 als auch das Betätigungselement 1 mit weiteren Einzelkomponenten versehen sein, die beispielsweise ergänzende Fahrzeugrahmenbedingungen in die logische Abfolge der Bedien- und Steuerbefehle einfließen lassen.

### Bezugszeichenliste

- 1: Betätigungselement
- 2: Steuerungseinheit
- 3: Getriebe
- 4: Parkbremssystem

- 6: Datenleitung
- 7: Drehpunkt

- 8: Anzeigevorrichtung

- A: Neutralposition
- B: Raststellung
- C: Raststellung
- D: Rückstellposition

## Patentansprüche

1. Bedienvorrichtung für ein Fahrzeug mit automatisiertem Getriebe und einem elektrisch betätigten Parkbremssystem, bestehend aus mindestens einem mechanischen Betätigungselement zur Eingabe von Bedienbefehlen des Fahrzeugnutzers und einer Steuerungseinheit zur Umsetzung der Bedienbefehle in Steuersignale an das Getriebe und das Parkbremssystem,
**dadurch gekennzeichnet, dass**
das Betätigungselement (1) mindestens zwei aufeinander folgende Raststellungen (B, C) sowie eine Neutralposition (A) und eine Rückstellposition (D) aufweist, wobei in der ersten Raststellung (B) ein Bedienbefehl an das Parkbremssystem (4) zur Betätigung der Parkbremsvorrichtung und in der zweiten Raststellung (C) ein Bedienbefehl an das Getriebe zur Betätigung der Parksperrvorrichtung generiert wird.

2. Bedienvorrichtung nach Anspruch 1,
**dadurch gekennzeichnet, dass**
die Steuerungseinheit (2) ein Prüfmodul aufweist, welches die Bedienbefehle des Betätigungselementes (1) nur bei nichtrollendem Fahrzeug unterhalb einer Grenzgeschwindigkeit an das Getriebe und das Parkbremssystem (4) übermittelt und bei bewegtem Fahrzeug den Bedienbefehl an ein Notbremssystem des Fahrzeuges zu dessen Betätigung übermittelt.

3. Bedienvorrichtung nach Anspruch 1 oder 2,
**dadurch gekennzeichnet, dass**
das Betätigungselement (1) als Bedienhebel ausgestaltet ist, bei dem die Raststellungen (B, C), die Neutralposition (A) und die Rückstellposition (D) in einer gemeinsamen Lageebene angeordnet sind.

4. Bedienvorrichtung nach Anspruch 3,
**dadurch gekennzeichnet, dass**
die Lageebene im Wesentlichen vertikal angeordnet ist.

5. Bedienvorrichtung nach Ansprüchen 1 bis 4,
**dadurch gekennzeichnet, dass**
das Betätigungselement (1) eine Rückstellvorrichtung zur automatischen Rückpositionierung des Betätigungselementes (1) aus allen Betätigungsstellungen und der Rückstellposition (D) in die Neutralposition (A) aufweist.

6. Bedienvorrichtung nach Ansprüchen 1 bis 4,
**dadurch gekennzeichnet, dass**
das Betätigungselement (1) mindestens eine Positioniervorrichtung zur Lagefixierung des Betätigungselementes (1) in einer der Raststellungen (A, B) aufweist.

7. Bedienvorrichtung nach einem der Ansprüche 1 bis 6,
**dadurch gekennzeichnet, dass**
die Bedienvorrichtung mit einer Anzeigevorrichtung (8) zur Visualisierung der Raststellungen (B, C) versehen ist.

8. Bedienvorrichtung nach Anspruch 6,
**dadurch gekennzeichnet, dass**
das Betätigungselement (1) eine Antriebsvorrichtung aufweist, die in Abhängigkeit von Steuerimpulsen der Steuerungseinheit (2) das Betätigungselement (1) in die Raststellung (C) überführt.

## Claims

1. Operator control device for a vehicle having an automated transmission and an electrically actuated parking brake system, comprising at least one mechanical actuating element for inputting operator control commands of the vehicle user as well as a control unit for converting the operator control commands into control signals to the transmission and the parking brake system,
**characterized in that**
the actuating element (1) has at least two successive detent positions (B, C) as well as a neutral position (A) and a resetting position (D), wherein in the first detent position (B) an operator control command to the parking brake system (4) for actuating the parking brake device and in the second detent position (C) an operator control command to the transmission for actuating the parking lock device is generated.

2. Operator control device according to claim 1,
**characterized in that**
the control unit (2) comprises a test module, which communicates the operator control commands of the actuating element (1) to the transmission and the parking brake system (4) only in the case of a non-rolling vehicle below a limit speed and in the case of a moving vehicle communicates the operator control command to an emergency brake system of the vehicle for actuation thereof.

3. Operator control device according to claim 1 or 2,
**characterized in that**
the actuating element (1) takes the form of an operator control lever, in which the detent positions (B, C), the neutral position (A) and the resetting position (D) are disposed in a common location plane.

4. Operator control device according to claim 3,
**characterized in that**
the location plane is disposed substantially vertically.

5. Operator control device according to claims 1 to 4,
**characterized in that**
the actuating element (1) comprises a resetting device for automatically repositioning the actuating element (1) from all of the actuating positions and the resetting position (D) into the neutral position (A).

6. Operator control device according to claims 1 to 4,
**characterized in that**
the actuating element (1) comprises at least one positioning device for fixing the position of the actuating element (1) in one of the detent positions (A, B).

7. Operator control device according to one of claims 1 to 6,
**characterized in that**
the operator control device is provided with a display device (8) for visually displaying the detent positions (B, C).

8. Operator control device according to claim 6,
**characterized in that**
the actuating element (1) comprises a drive device, which in dependence upon control pulses of the control unit (2) transfers the actuating element (1) into the detent position (C).

## Revendications

1. Dispositif de commande pour un véhicule doté de boîte de vitesses automatique et d'un système de frein de parking à commande électrique, comprenant au moins un élément d'actionnement mécanique pour l'entrée d'instructions de commande pour l'utilisateur du véhicule et une unité de commande pour la conversion des instructions de commande en signaux de commande destinés la boîte de vitesses et au système de frein de parking,
**caractérisé en ce que**
l'élément d'actionnement (1) présente au moins deux positions d'encliquetage (B, C) successives et une position neutre (A) et une position de rappel (D), une instruction de commande destinée au système de frein de parking (4) pour l'actionnement du dispositif de frein de parking étant générée dans la première position d'encliquetage (B) et une instruction de commande destinée à la boîte de vitesses pour l'actionnement du dispositif de frein de parking étant générée dans la seconde position d'encliquetage (C).

2. Dispositif de commande selon la revendication 1,
**caractérisé en ce que**
l'unité de commande (2) présente un module de contrôle qui transmet les instructions de commande de l'élément d'actionnement (1), uniquement lorsque le véhicule ne roule pas au-dessous d'une vitesse limite, à la boîte de vitesses et au système de frein de parking (4), et, lorsque le véhicule est en déplacement, transmet l'instruction de commande à un système de freinage d'urgence du véhicule pour son actionnement.

3. Dispositif de commande selon la revendication 1 ou 2,
**caractérisé en ce que**
l'élément d'actionnement (1) est conçu sous forme de levier de commande, sur lequel les positions d'encliquetage (B, C), la position neutre (A) et la position de rappel (D) sont disposées dans un plan de position commun.

4. Dispositif de commande selon la revendication 3,
**caractérisé en ce que**
le plan de position est disposé essentiellement verticalement.

5. Dispositif de commande selon les revendications 1 à 4,
**caractérisé en ce que**
l'élément d'actionnement (1) présente un dispositif de rappel pour le positionnement de retour automatique de l'élément d'actionnement (1) à partir de toutes les positions d'actionnement et de la position de rappel (D) dans la position neutre (A).

6. Dispositif de commande selon les revendications 1 à 4,
**caractérisé en ce que**
l'élément d'actionnement (1) présente au moins un dispositif de positionnement pour la fixation de position de l'élément d'actionnement (1) dans l'une des positions d'encliquetage (A, B).

7. Dispositif de commande selon l'une quelconque des revendications 1 à 6,
**caractérisé en ce que**
le dispositif de commande est doté d'un dispositif d'affichage (8) pour la visualisation des positions d'encliquetage (B, C).

8. Dispositif de commande selon la revendication 6,
**caractérisé en ce que**
l'élément d'actionnement (1) présente un dispositif d'entraînement qui, en fonction d'impulsions de commande de l'unité de commande (2), entraîne l'élément d'actionnement (1) dans la position d'encliquetage (C).
